# EUROPEAN PATENT SPECIFICATION

(11) **EP 1 421 801 B1**
(45) Date of publication and mention of the grant of the patent: **09.11.2005**
(21) Application number: 02750266.5
(22) Date of filing: 23.07.2002
(51) Int. Cl.: H04Q 3/00

(54) **METHOD AND APPARATUS FOR TRANSMITTING, RECEIVING, AND EXECUTING APPLICATION QUERY MESSAGES VIA AN INTERNET PROTOCOL TRANSPORT**
VERFAHREN UND VORRICHTUNG ZUR ÜUBERTRAGUNG, ZUM EMPFANG UND ZUM DURCHFÜHRUNG VON ANWENDUNGSANFRAGENACHRICHTEN ÜBER EINE INTERNETPROTOKOLLÜBERMITTLUNG
PROCEDE ET DISPOSITIF D'EMISSION, DE RECEPTION ET D'EXECUTION DE MESSAGES DE CONSULTATION D'APPLICATION VIA UN PROTOCOLE DE TRANSPORT DE L'INTERNET

(30) Priority: 23.08.2001 US 314322 P; 03.06.2002 US 161533
(43) Date of publication of application: 26.05.2004
(73) Proprietor: MOTOROLA, INC., Schaumburg, IL 60196 (US)
(72) Inventor: SEGAL, Niranjan Nath,, Arlington, TX 76006 (US)
(74) Representative: Openshaw, Paul Malcolm
(86) International application number: PCT/US2002/023435
(87) International publication number: WO 2003/019955

(56) References cited:
- WO-A-00/35205
- US-B1- 6 178 181

## Description

### Field of the Invention

The present invention relates generally to communication systems and in particular, to a method and apparatus for transmitting, receiving, and executing application query messages via an internet protocol transport.

### Background of the Invention

Existing signaling system seven (SS7) messages are transported exclusively over the public-switched telephone networks (PSTNs) using standard transport protocols (e.g., MTP3/2/1) and T1/E1 lines. Over the years, SS7 has developed a large amount of applications and services that are now considered inherent in any telephone system. For example, caller identification, call forwarding, call roaming,... , etc. have all been developed and are vastly utilized by SS7.

Recently, however, more and more networks are moving towards an Internet Protocol (IP) based transport. The move to an IP-based transport provides flexibility and less cost, but will not be without a host of new problems, including how to maintain existing SS7 services and applications over the IP-based network. Therefore a need exists for a method and apparatus for transmitting, receiving, and executing an SS7 application and query messages via an IP-based network transport.

An example may be found in WO 00/35205.

### Brief Description of the Drawings

FIG. 1 is a block diagram of a communication system in accordance with a the preferred embodiment of the present invention.
FIG. 2 is a flow chart showing operation of the communication system of FIG. 1 in accordance with the preferred embodiment of the present invention.
FIG. 3 illustrates an IP packet containing SS7 information in accordance with the preferred embodiment of the present invention.
FIG. 4 is a block diagram of the SS7/IP user Application Proxy (SAP) in accordance with the preferred embodiment of the present invention.
FIG. 5 is a flow chart showing operation of the SAP of FIG. 4 in accordance with the preferred embodiment of the present invention.

### Detailed Description of the Drawings

To address the above-mentioned need, a method and apparatus for transmitting, receiving, and executing SS7 User Adaptation messages is provided herein. In accordance with the preferred embodiment of the present invention, an SS7 application proxy function is provided that receives particular SS7 User Adaptation Messages within an IP packet, determines the type of application requested, and forwards these messages to an appropriate application. Because standard SS7 messages are transmitted via an IP transport, the transport advantages if IP are combined with the existing applications/services provided by SS7.
The present invention encompasses a method for receiving and executing an application query message via an IP transport. The method comprising the steps of receiving an IP packet, extracting an SS7 user adaptation message from the IP packet, and determining an appropriate user application from the SUA message. An appropriate address for execution of the user application is determined and the SUA message is re-encapsulated within a second IP packet. Finally the second IP packet with the SUA message is forwarded to the appropriate address for execution of the user application.

The present invention additionally encompasses a method for receiving and executing an application query message via an IP transport. The method comprising the steps of receiving an IP packet, extracting an SS7 user adaptation message from the IP packet, and determining an appropriate user application from the SUA message. In the preferred embodiment of the present invention the user application is chosen from the group consisting of user authentication, caller identification, call forwarding, and call roaming. An appropriate address for execution of the user application is determined and the SUA message is re-encapsulated within a second IP packet. Finally the second IP packet with the SUA message is forwarded to the appropriate address for execution of the user application.

Finally, the present invention encompasses an apparatus for receiving and executing an application query message via an internet protocol transport. The apparatus comprises logic circuitry having a first IP packet as an input and a second IP packet as an output, wherein the first IP packet comprises an SS7 User Adaptation (SUA) message and a first IP address, and the second IP packet comprises the SS7 User Adaptation message and a second IP address. An SS7 application database is provided, coupled to the logic circuitry, the SS7 application database providing the logic circuitry with the second IP address.

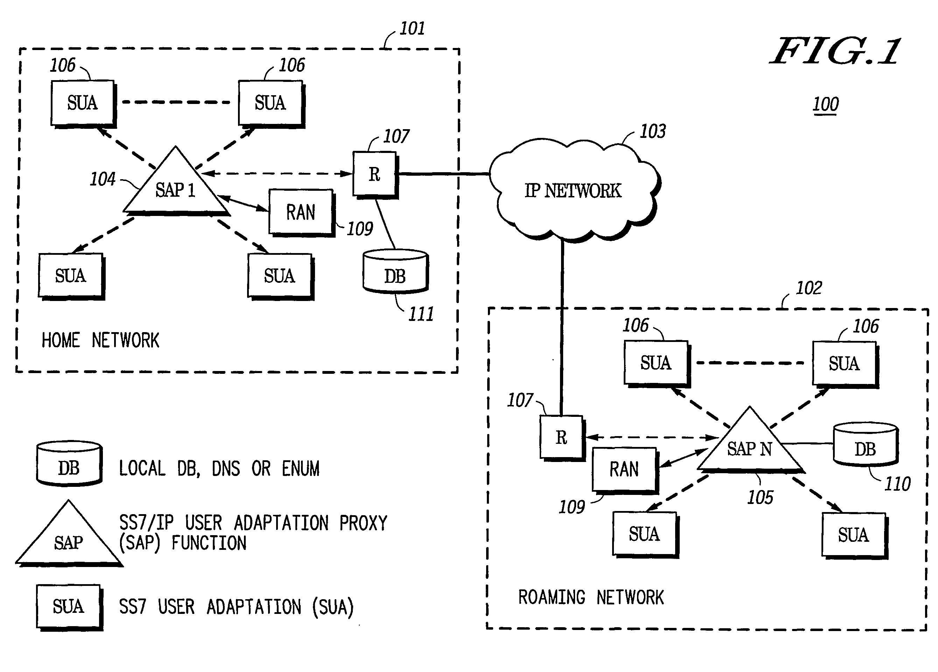

Turning now to the drawings, wherein like numerals designate like components, FIG. 1 is a block diagram of communication system 100 in accordance with a the preferred embodiment of the present invention. As shown, communication system 100 comprises home network 101, roaming network 102, and an intervening IP network 103. In the preferred embodiment of the present invention both home and roaming networks 101 and 102 comprise radio access networks (RANs) 109 and SS7 user Adaptation Proxy functions (SAPs) 104 and 105. Networks 101 and 102 also comprise a plurality of SS7 user adaptations 106, router 107, and database/DNS lookup 110.

In the preferred embodiment of the present invention SAPs 104 and 105 serve as proxy servers that forward particular messages to another system in response to a request to do so. More particularly SAPs are logical entities used to front end all the SS7 user adaptation (SUA) service nodes for the incoming SUA messages either from the IP network or from the SS7 network via a signaling gateway, utilizing the Stream Control Transmission Protocol (SCTP) association with the Application Server Process/Signaling Gateway Process (ASP/SGP).

RANs 109 are preferably cellular communication systems that utilize a communication protocol such as, but not limited to, a Code Division Multiple Access (CDMA) system protocol, the Narrowband Advanced Mobile Phone Service (NAMPS) protocol, the Advanced Mobile Phone Service (AMPS) protocol, the Global System for Mobile Communications (GSM) protocol, General Packet Radio System (GPRS), the Personal Digital Cellular (PDC) protocol, or the United States Digital Cellular (USDC) protocol.

During operation, SAPs 104 and 105 receive standard SS7 user adaptation (SUA) messages encapsulated within IP packets. As one of ordinary skill in the art would recognize, SUA messages comprise SCCP User Data as defined by the Internet Engineering Task Force (IETF) in draft-IETF-sigtran-SUA-07.txt. In the preferred embodiment of the present invention SAPs 104 and 105 extract the SUA messages from the IP packets and determine the type of service or application requested. In the preferred embodiment of the present invention each SUA 106 serves to provide an SS7 service/application. Once the service or application has been determined by the SAP, the SAP then forwards the SUA message to the appropriate application (SUA) 106 for execution.

For example, RAN 109 may provide SAP 105 with a standard SS7 request for authentication. The standard authentication message is encapsulated within an IP packet and transmitted, to SAP 105. Once received, SAP 105 examines the SUA message, which in this case is an SS7 authentication message, and determines the type of message received. Once the type of message is determined, an appropriate SUA 106 is determined. The SS7 message is passed to that particular SUA 106. Depending upon what type of SS7 message has been forwarded to SUA 106, SAP 105 may receive a response from SUA 106 that is passed on to the particular service/application requester.

Because standard SS7 messages transmitted via an IP transport can be utilized by SAP 105, the communication system described above combines the transport advantages if IP with the existing applications/services provided by SS7.

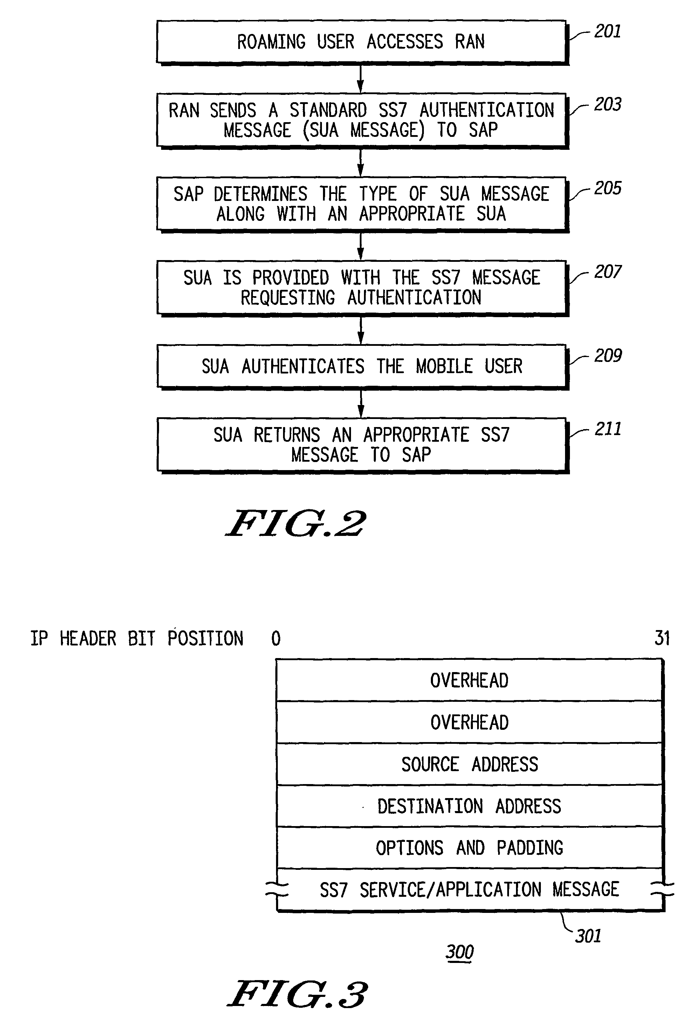

FIG. 2 is a flow chart showing operation of communication system 100 of FIG. 1 in accordance with the preferred embodiment of the present invention. Although communication system 100 is capable of processing all SS7 services/applications, the description that follows illustrates operation of communication system 100 during a user authentication.

The logic flow begins at step 201 where a roaming user (not shown) accesses RAN 109. As part of accessing a RAN, the RAN is provided with a mobile station identifier (typically an International Mobile Station Identification (IMSI)). RAN 109 then sends a standard SS7 authentication message (SUA message) to SAP 105 (step 203). As described above, the authentication message is encapsulated in an IP packet and transmitted via an IP protocol to SAP 105. Once the message has been received by SAP 105, SAP 105 determines the type of SUA message along with an appropriate SUA 106 (step 205). Once an appropriate SUA 106 has been determined (in this case a SUA that performs authentication) by SAP 105, the SUA is provided with the SS7 message requesting authentication (step 207). As described above, SUA 106 serves to execute a particular SS7 application/service, and in this example, SUA 106 authenticates the mobile user (step 209), and returns an appropriate SS7 message to SAP 105 either authenticating or denying the roaming user (step 211). This message is then passed to the requesting RAN 109.

During authentication (step 209), SUA 106 actually executes a series of steps that are required for authentication purposes. More particularly, from the IMSI, SUA 106 determines a country code, area code, and exchange code for the roaming user's home network. Once the user's home network is determined, a particular user's node on that network needs to be determined so the node can be queried whether the user is a valid user or not. To accomplish this, SUA 106 accesses a local Domain Name Server (DNS) 111 via network 103, and provides the server with a translated IMSI called E.214 number (CC+NPA+Exchange Code) via a DNS query. Local DNS server 111 determines an IP address for SAP 104 existing on the user's home network. The IP address for SAP 104 in the home network is then provided to SUA 106 on the roaming network via the response to the DNS query. After receiving this IP address for the SAP, SUA 106 sends an SS7 SUA authentication message to SAP 104 using this IP address. SAP 104 forwards the authentication message to an appropriate SUA 106 on the home network, and SUA 106 on the home network returns an authorization message to SUA 106 on the roaming network.

As discussed above, the preceding discussion was limited to user authentication, however, in accordance with the preferred embodiment of the present invention *any* SS7 application/service may be performed via the above technique.

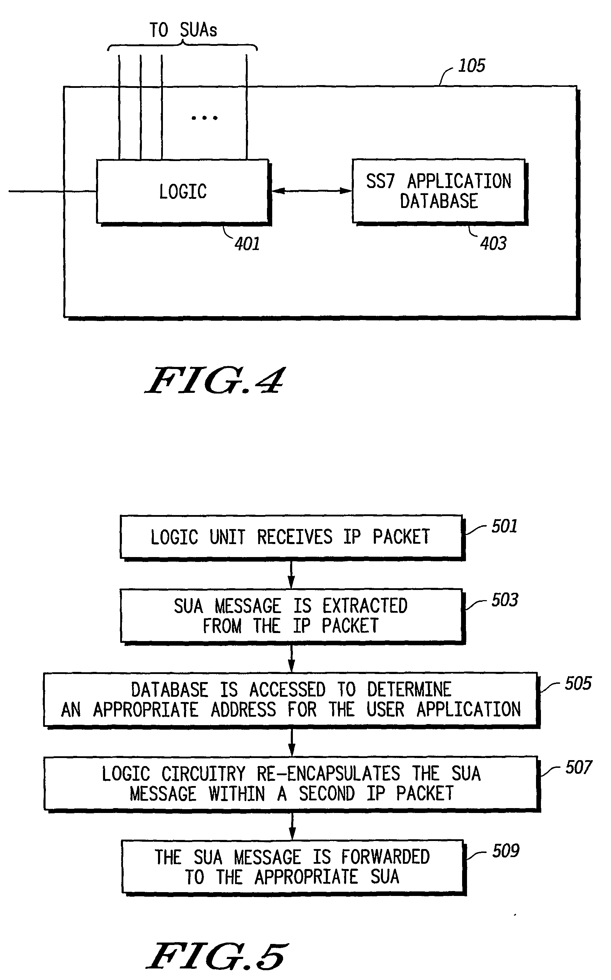

FIG. 3 illustrates IP packet 300 containing SS7 information in accordance with the preferred embodiment of the present invention. As shown, IP packet 300 comprises overhead information, source address, destination address, options and padding, and an SS7 service/application (SUA) message 301. As one of ordinary skill in the art would recognize, overhead information for the IP packet comprises information such as IP version, total packet length, time to live, header checksum,... , etc. Additionally, as discussed above, SUA message comprises Signaling Connection and Control Protocol (SCCP) data as described in ITU specification Q.713.

FIG. 4 is a block diagram of the SS7/IP User Application Proxy (SAP) in accordance with the preferred embodiment of the present invention. As shown, SAP 105 comprises logic circuitry 401 and an SS7 Application database 403. In the preferred embodiment of the present invention logic circuitry 401 accesses database 403 to determine where to route a received SUA message. More particularly, logic unit 401 receives a first IP packet 300 having a first address. Logic circuitry 401 then retrieves the particular SUA message 201 encapsulated within IP packet 300. Once SUA message 301 has been determined, database 403 is accessed to determine a second IP address of the appropriate SUA. SUA message 301 is re-encapsulated in a new IP packet and transmitted to the appropriate SUA.

FIG. 5 is a flow chart showing operation of SAP 105 of FIG. 4 in accordance with the preferred embodiment of the present invention. The logic flow begins at step 501 where logic unit 401 receives IP packet 300. As discussed above, IP packet 300 comprises standard SS7 user adaptation message 301 as shown in FIG. 3. Once received, SUA message 301 is extracted from the IP packet 300 at step 503. At step 505 a user application is determined and database 403 is accessed to determine an appropriate address for the user application. As discussed above, networks 101 and 102 comprise multiple SUAs 106, each capable of executing a particular SS7 service/application. Because of this, logic circuitry 401 needs to determine a particular SUA 106 for routing SUA message 301. This information is returned from database 403.

Continuing, at step 507 logic circuitry 401 re-encapsulates SUA message 301 within a second IP packet. In the preferred embodiment of the present invention the second IP packet contains the address of the SUA that will execute the application requested within the SUA message. Finally, at step 509, the SUA message is forwarded to the appropriate SUA 106.

It should be noted that in addition to forwarding SUA message 301 to the appropriate SUA 106, logic unit may also receive information back from SUA 106. For example, in situations where the execution of a particular SS7 application results in information returned, this information will be retuned to SUA 106 for further processing. For instance, as discussed above, an SS7 authentication message results in the return of specific information (e.g., whether the user is a valid user). After logic unit 401 forwards the authentication message to the appropriate SUA 106, SUA 106 will execute the application and provide logic unit 401 with an appropriate answer.

While the invention has been particularly shown and described with reference to a particular embodiment, it will be understood by those skilled in the art that various changes in form and details may be made. For example, It is intended that such changes come within the scope of the following claims.

## Claims

1. A method for processing an application query message received from a remote Signalling System 7, further referred to an SS7, network [102] at a home SS7 network [101] via an internet protocol transport [103], the method comprising the steps of: receiving an Internet Protocol, abbreviated as IP, packet [300] at an adaptation proxy server, abbreviated as SAP, [104] associated with the home network, wherein the IP packet encapsulates an SS7 user adaptation message [301]; extracting the SS7 user adaptation abbreviated as SUA, message from the IP packet at the SAP; determining an appropriate address of an SS7 application residing within the home SS7 network for processing the SUA message; and forwarding the SUA message to the appropriate address to allow processing of the SUA message at the SS7 user application.

2. The method of claim 1 wherein the user application is chosen from the group consisting of user authentication, caller identification, call forwarding, and call roaming.

3. The method of claim 1 wherein the step of determining the appropriate address for execution of the user application comprises the step of determining an appropriate SS7 address for execution of the user application.

4. The method of claim 1 further comprising the steps of receiving a response message from the SS7 application at the SAP, encapsulating the response message in a second IP packet; and transmitting the second IP packet via the internet protocol transport to a second SAP [105] associated with the remote SS7 network.

5. An apparatus [104, 105] for processing an internet protocol (IP) packet [300] encapsulating an SS7 user adaptation message [301] received from a remote SS7 network [102] at a home SS7 network [101] via an internet protocol network [103], **characterized in that** the apparatus comprises: logic circuitry [401] configured to receive the IP packet and to extract the SS7 user adaptation (SUA) message; and an SS7 application database [403] in communication with the logic circuitry to allow determination of an appropriate address of an SS7 application residing within the home SS7 network for processing the SUA message; and an interface to the home SS7 network for forwarding the SUA message to the appropriate address to allow processing of the SUA message at the SS7 user application.

6. The apparatus of claim 5 wherein the logic circuitry is further configured to receive a response message from the SS7 application via the interface to the home SS7 network, to encapsulate the response message in a second IP packet; and to transmit the second IP packet via the internet protocol network to a second SAP [105] associated with the remote SS7 network.

## Patentansprüche

1. Verfahren zum Verarbeiten einer Anwendungsabfragenachricht, die von einem entfernten Signalisierungssystem 7-, weiter als SS7 bezeichnet, -Netz [102] in einem Heimat-SS7-Netz [101] über einen Internetprotokolltransport [103] empfangen wird, wobei das Verfahren die Schritte umfasst: Empfangen eines Internet Protocol-, abgekürzt als IP,-Pakets [300] an einem Adaptationsproxyserver, abgekürzt als SAP, [104], der mit dem Heimatnetz verbunden ist, wobei das IP-Paket eine SS7-Benutzeradaptationsnachricht [301] verkapselt; Extrahieren der SS7-Benutzeradaptations-, abgekürzt als SUA, -Nachricht aus dem IP-Paket auf dem SAP; Ermitteln einer geeigneten Adresse einer SS7-Anwendung, die sich innerhalb des Heimat-SS7-Netzes befindet, zum Verarbeiten der SUA-Nachricht; und Weiterleiten der SUA-Nachricht an die geeignete Adresse, um ein Verarbeiten der SUA-Nachricht in der SS7-Benutzeranwendung zu ermöglichen.

2. Verfahren nach Anspruch 1, wobei die Benutzeranwendung aus der Gruppe bestehend aus Benutzerauthentifizierung, Anruferidentifizierung, Anrufweiterleitung und Anruf-Roaming ausgewählt wird.

3. Verfahren nach Anspruch 1, wobei der Schritt zum Ermitteln der geeigneten Adresse zur Ausführung der Benutzeranwendung den Schritt zum Ermitteln einer geeigneten SS7-Adresse zur Ausführung der Benutzeranwendung umfasst.

4. Verfahren nach Anspruch 1, wobei darüber hinaus die Schritte des Empfangens einer Antwortnachricht von der SS7-Anwendung auf dem SAP, des Verkapselns der Antwortnachricht in ein zweites IP-Paket; und des Übertragens des zweiten IP-Pakets über den Internetprotokolltransport zu einem zweiten SAP [105], der mit dem entfernten SS7-Netz verbunden ist, vorgesehen sind.

5. Vorrichtung [104, 105] zum Verarbeiten eines Internetprotokoll(IP)-Pakets [300], das eine SS7-Benutzeradaptationsnachricht [301] verkapselt, die von einem entfernten SS7-Netz [102] in einem Heimat-SS7-Netz [101] über ein Internetprotokollnetz [103] empfangen wird, **dadurch gekennzeichnet, dass** die Vorrichtung umfasst: Logikschaltungen [401], konfiguriert, um das IP-Paket zu empfangen und um die SS7-Benutzeradaptations(SUA)-Nachricht zu extrahieren; und eine mit den Logikschaltungen in Kommunikation stehende SS7-Anwendungsdatenbank [403], um zum Verarbeiten der SUA-Nachricht eine Ermittlung einer geeigneten Adresse einer SS7-Anwendung, die sich innerhalb des Heimat-SS7-Netzes befindet, zu ermöglichen; und eine Schnittstelle zum Heimat-SS7-Netz zum Weiterleiten der SUA-Nachricht an die geeignete Adresse, um ein Verarbeiten der SUA-Nachricht in der SS7-Benutzeranwendung zu ermöglichen.

6. Vorrichtung nach Anspruch 5, wobei die Logikschaltungen darüber hinaus konfiguriert sind, um eine Antwortnachricht von der SS7-Anwendung über die Schnittstelle zum Heimat-SS7-Netz zu empfangen, um die Antwortnachricht in einem zweiten IP-Paket zu verkapseln; und um das zweite IP-Paket über das Internetprotokollnetz zu einem zweiten SAP [105], der mit dem entfernten SS7-Netz verbunden ist, zu übertragen.

## Revendications

1. Procédé pour traiter un message d'interrogation d'application qui est reçu depuis un réseau de système de signalisation 7, appelé par la suite SS7, [102] au niveau d'un réseau SS7 domestique [101] via un transport de protocole de l'Internet [103], le procédé comprenant les étapes de : réception d'un paquet de protocole de l'Internet, abrégé en IP, [300] au niveau d'un serveur proxy d'adaptation, abrégé en SAP, [104] qui est associé au réseau domestique, où le paquet IP encapsule un message d'adaptation d'utilisateur SS7 [301] ; extraction du message d'adaptation d'utilisateur SS7, abrégé en SUA, à partir du paquet IP au niveau du SAP ; détermination d'une adresse appropriée d'une application SS7 qui réside à l'intérieur du réseau SS7 domestique pour traiter le message SUA ; et renvoi du message SUA sur l'adresse appropriée pour permettre le traitement du message SUA au niveau de l'application d'utilisateur SS7.

2. Procédé selon la revendication 1, dans lequel l'application d'utilisateur est choisie parmi le groupe comprenant une authentification d'utilisateur, une identification d'appelant, un renvoi d'appel et un roaming d'appel.

3. Procédé selon la revendication 1, dans lequel l'étape de détermination de l'adresse appropriée pour une exécution de l'application d'utilisateur comprend l'étape de détermination d'une adresse SS7 appropriée pour l'exécution de l'application d'utilisateur.

4. Procédé selon la revendication 1, comprenant en outre les étapes de réception d'un message de réponse en provenance de l'application SS7 au niveau du SAP, d'encapsulage du message de réponse dans un second paquet IP ; et de transmission du second paquet IP via le transport de protocole de l'Internet jusqu'à un second SAP [105] qui est associé au réseau SS7 à distance.

5. Appareil [104, 105] pour traiter un paquet de protocole de l'Internet (IP) [300] qui encapsule un message d'adaptation d'utilisateur SS7 [301] qui est reçu depuis un réseau SS7 à distance [102] au niveau d'un réseau SS7 domestique [101] via un réseau de protocole de l'Internet [103], **caractérisé en ce que** l'appareil comprend : un circuit logique [401] qui est configuré pour recevoir le paquet IP et pour extraire le message d'adaptation d'utilisateur SS7 (SUA) ; et une base de données d'application SS7 [403] en communication avec le circuit logique pour permettre la détermination d'une adresse appropriée d'une application SS7 qui réside à l'intérieur du réseau SS7 domestique pour traiter le message SUA ; et une interface sur le réseau SS7 domestique pour renvoyer le message SUA sur l'adresse appropriée pour permettre le traitement du message SUA au niveau de l'application d'utilisateur SS7.

6. Appareil selon la revendication 5, dans lequel le circuit logique est en outre configuré pour recevoir un message de réponse depuis l'application SS7 via l'interface sur le réseau SS7 domestique, pour encapsuler le message de réponse dans un second paquet IP et pour transmettre le second paquet IP via le réseau de protocole de l'Internet jusqu'à un second SAP [105] qui est associé au réseau SS7 à distance.
